# FASCICULE DE BREVET EUROPEEN

(11) **EP 0 993 877 B1**
(45) Date de publication et mention de la délivrance du brevet: **17.03.2004**
(21) Numéro de dépôt: 99402521.1
(22) Date de dépôt: 13.10.1999
(51) Int. Cl.: B07C 5/02, B07C 5/342

(54) **Station d'examen visuel de fruits**
Station zur visuellen Untersuchung von Früchten
Station for the visual examination of fruits

(30) Priorité: 14.10.1998 FR 9812883
(43) Date de publication de la demande: 19.04.2000
(73) Titulaire: XEDA INTERNATIONAL, 13670 Saint-Andiol (FR)
(72) Inventeur: Sardo, Alberto, 13160 Chateau Renard (FR)
(74) Mandataire: Blot, Philippe Robert Emile

(56) Documents cités:
- EP-A- 0 415 154
- US-A- 4 742 921
- PATENT ABSTRACTS OF JAPAN vol. 096, no. 011, 29 novembre 1996 (1996-11-29) & JP 08 175647 A (ISHII IND CO LTD), 9 juillet 1996 (1996-07-09)
- PATENT ABSTRACTS OF JAPAN vol. 097, no. 001, 31 janvier 1997 (1997-01-31) & JP 08 225144 A (ISHII IND CO LTD), 3 septembre 1996 (1996-09-03)
- PATENT ABSTRACTS OF JAPAN vol. 097, no. 012, 25 décembre 1997 (1997-12-25) & JP 09 215963 A (ISHII IND CO LTD), 19 août 1997 (1997-08-19)

## Description

La présente invention concerne une station d'examen visuel d'articles tels que des fruits, du type comportant des moyens de transport adaptés pour supporter les articles pendant leur transport, telle que définie dans le préambule de la revendication 1.

De telles stations sont connues en particulier des documents JP 08175647, JP 08225144 et JP 09215963.

Les installations actuelles de tri de fruits comportent généralement, en plus des moyens de pesage des fruits, une station d'examen visuel de ceux-ci permettant de déterminer, pour chaque fruit, sa forme, sa couleur, ainsi que d'éventuels défauts de surface.

Pour un tri efficace des fruits, il convient que chaque fruit soit examiné visuellement suivant plusieurs directions réparties autour de celui-ci, de sorte que l'essentiel de la surface du fruit soit examiné. En particulier, il convient que le poste de vision puisse avoir accès à la face d'appui du fruit sur les moyens de transport.

Pour l'examen de la face d'appui, il est connu de disposer, sous les moyens de transport, une caméra dont le champ de vision est dirigé vers le haut et traverse les moyens de transport. A cet effet, ces derniers sont constitués d'un convoyeur ajouré, formé par exemple, de fins brins transversaux sur lesquels les fruits prennent appui.

La nécessité de prévoir un convoyeur ajouré pour le transport des fruits augmente la complexité des moyens de transport, d'autant que ces derniers doivent garantir un espacement constant entre les fruits suivant la longueur du convoyeur.

Les installations selon les documents JP 08175647, JP 08225144 et JP 09215963 comportent, quant à elles, des moyens de retournement d'articles entre deux caméras qui sont rapportés sur un convoyeur.

L'invention a pour but de fournir une station d'examen visuel d'articles se déplaçant sur des moyens de transport, qui ne nécessite pas des moyens de transport pourvus de surfaces d'appui ajourées afin de permettre l'examen de la face d'appui des articles sur les moyens de transport et qui s'intégre simplement dans une installation de tri d'articles.

A cet effet, l'invention a pour objet une station d'examen visuel d'articles tels que des fruits, selon la revendication 1.

Suivant des modes particuliers de réalisation, la station comporte l'une ou plusieurs des caractéristiques des revendications dépendantes.

L'invention sera mieux comprise à la lecture de la description qui va suivre, donnée uniquement à titre d'exemple et faite en se référant aux dessins, sur lesquels :
- la figure 1 est une vue de dessus d'une station d'examen visuel d'articles selon l'invention ;
- les figures 2 et 3 sont des vues en coupe transversales de la zone de transfert de la figure 1 prises respectivement suivant la ligne II-II et la ligne III-III ;
- la figure 4 est une vue de dessus d'une variante de réalisation d'une station d'examen visuel d'articles selon l'invention; et
- la figure 5 est une vue en coupe transversale de la zone de transfert de la figure 1.

L'installation représentée sur les figures est une installation destinée au tri d'articles tels que des fruits reçus en vrac. Elle est destinée à répartir les articles dans des canaux distincts en fonction de critères prédéterminés portant sur les articles tels que leur poids, leur couleur et leur aspect.

L'installation comporte essentiellement une station de chargement 10, une station de pesage 12, une station d'examen visuel 14 et une zone ou station d'éjection 16. Des moyens de transport 18 assurent l'acheminement des produits de la station de chargement 10 à la station d'éjection 16.

Les moyens de transport 18 comportent successivement un premier convoyeur 20 et un second convoyeur 22, ainsi que des moyens 24 de transfert des articles du premier convoyeur au second convoyeur au sein de la station d'examen visuel 14. Dans la station 14, les deux convoyeurs 20, 22 s'étendent parallèlement l'un à l'autre sur un tronçon commun de transfert 25. Les moyens 24 sont adaptés en outre pour le retournement des articles lors de leur transfert du premier convoyeur 20 au second convoyeur 22.

En entrée du premier convoyeur 20 est disposée la station de chargement 10. Celle-ci est adaptée pour recevoir des articles en vrac et répartir ceux-ci régulièrement suivant la longueur du convoyeur 20, comme cela sera expliqué dans la suite de la description. La station de chargement 10 comporte un conduit convergent en forme d'entonnoir adapté pour amener en vrac les articles sur le convoyeur.

La station de pesage 12 est disposée sur le convoyeur 20 en aval de la station de chargement 10. En sortie de la station de pesage, le premier convoyeur 20 pénètre dans la station d'examen visuel 14.

En sortie de la station d'examen visuel 14 le second convoyeur 22 entre dans la station d'éjection 16. Il chemine transversalement au-dessus d'un ensemble de canaux parallèles 26 emplis d'eau. Ces canaux sont par exemple au nombre de 40 et ont chacun une largeur d'un mètre.

Des moyens de déclenchement 28 sont disposés le long du second convoyeur 22. Ils sont adaptés pour provoquer l'éjection des articles dans l'un sélectionné des canaux 26 en fonction de critères relatifs au type des articles. Les moyens de déclenchement 28 comportent le long du convoyeur 22 des éléments de déclenchement 28A associés chacun à un canal 26.

Afin de provoquer l'éjection sélective des articles, la station de pesage 12 et la station d'examen visuel 14 sont reliées à une unité de traitement d'informations 30 adaptée pour commander les moyens de déclenchement 28.

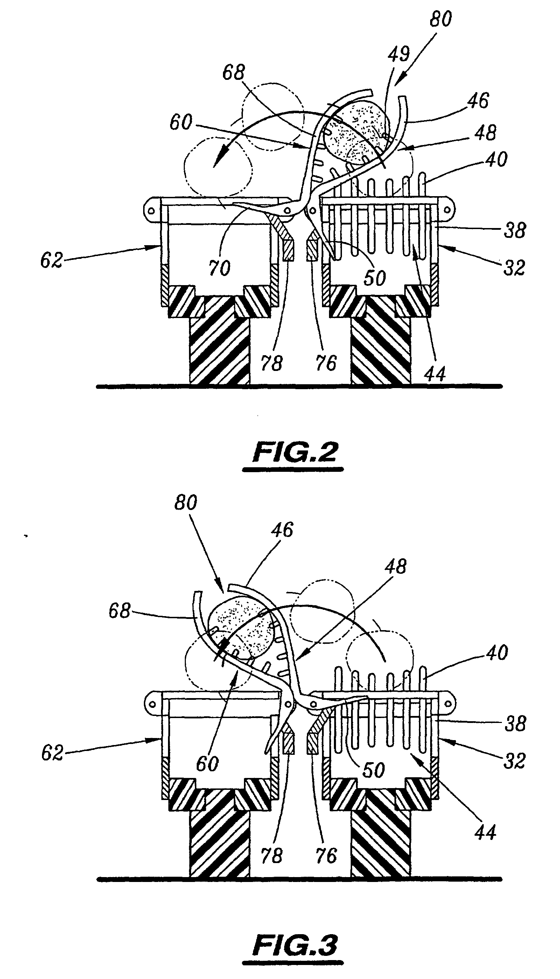

Comme représenté à plus grande échelle sur les figures 2 et 3, le premier convoyeur 20 a une structure adaptée pour la répartition automatique des articles suivant sa longueur, lors de leur chargement dans la station 10. Les articles sont ainsi espacés les uns des autres d'un pas déterminé, par exemple constant suivant la longueur du convoyeur.

A cet effet, le premier convoyeur 20 comporte une boucle d'entraînement 32 montée mobile entre deux roues d'extrémité 34, 36, dont l'une d'elles est entraînée en rotation par un moteur non représenté. La boucle d'entraînement 32 est formée d'une succession d'éléments 38 articulés les uns aux autres. Elle est déplaçable en boucle fermée entre les roues 34, 36.

Des rouleaux 40 sont montés rotatifs par rapport à la boucle d'entraînement 32 autour d'axes perpendiculaires à la direction d'avancement du convoyeur. Les axes de rotation sont portés par les éléments 38 formant la boucle d'entraînement. Les rouleaux 40 ont une forme générale de diabolo, c'est-à-dire qu'ils sont constitués de deux tronçons tronconiques coaxiaux reliés dans leur zone de petit diamètre. Ainsi, les rouleaux 40 présentent une section médiane étroite et des extrémités élargies. Ils comportent en outre cinq gorges périphériques 44 régulièrement réparties sur leur longueur.

Les rouleaux 40 sont répartis régulièrement suivant toute la longueur de la boucle d'entraînement 32. Ils définissent entre eux des logements équidistants 45 en forme d'alvéoles destinés à la réception d'un unique article libéré par la station de chargement 10.

Le fond de chaque alvéole 42 est délimité par un premier bras 46 d'un levier de support 48 des articles. Le bras 46 forme un bras de support pour l'article reçu dans l'alvéole correspondant. Il est prévu un levier par alvéole 45. Chaque levier 48 est articulé autour d'un axe s'étendant suivant la direction d'avancement du convoyeur sur un élément 38 de la chaîne d'entraînement.

Le bras de support 46 est pourvu latéralement de chaque côté de doigts 49 de maintien d'un article. Ceux-ci sont par exemple au nombre de cinq. Ils sont disposés pour être reçus dans les gorges périphériques 44 des rouleaux adjacents.

Le second bras, noté 50, de chaque levier de support 48 forme un bras de commande. Il s'étend latéralement vers le bas le long du convoyeur 20 lorsque le levier 48 est dans sa position de transport d'un article, c'est-à-dire que le bras de support 46 s'étend sensiblement horizontalement.

Les leviers 48 sont tous articulés sur le bord latéral du premier convoyeur qui est orienté vers le second convoyeur.

Le second convoyeur 22 est sensiblement analogue au premier convoyeur 20. Toutefois, celui-ci est avantageusement dépourvu de rouleaux 40 entre les leviers de support notés 60. Ces derniers sont articulés, comme dans le premier convoyeur, sur le bord latéral d'une boucle d'entraînement 62 montée mobile entre deux rouleaux 64, 66. Les leviers 60 sont articulés sur le bord de la boucle d'entraînement 62 qui fait face au premier convoyeur 20 sur le tronçon de transfert 25.

Les leviers 60 sont répartis sur la longueur du convoyeur en étant espacés d'un pas constant égal à celui séparant les leviers 48 du premier convoyeur. Les deux convoyeurs ont leurs vitesses d'avancement synchronisées afin que les leviers 48 et 60 se déplacent côte à côte sur le tronçon de transfert 25.

Les leviers 60 comportent, comme les leviers 48, un bras 68 de support des articles pourvu latéralement de chaque côté des doigts de maintien d'un article. Les leviers 60 comportent en outre chacun un second bras 70 formant un bras de commande. Ce dernier s'étend latéralement vers le bas le long de la boucle d'entraînement 62, lorsque le levier de support est en position de transport d'un article.

Les moyens de transfert et de retournement 24 visibles sur les figures 2 et 3 comportent, outre les leviers de support 48 et 60 des premier et second convoyeurs, des moyens d'actionnement des bras de commande associés 50 et 70. Ces moyens d'actionnement sont notés respectivement 76 et 78. Ils sont formés chacun par une rampe fixe formant surface de came. Ces rampes sont disposées latéralement entre les deux convoyeurs sur la longueur du tronçon de transfert 25. Elles sont adaptées respectivement pour soulever les bras de commande 50, 70 des leviers d'éjection lors de leur passage dans le tronçon de transfert 25.

Les rampes présentent un profil tel que, lors de leur déplacement sur le tronçon de transfert 25, les deux leviers en regard basculent de la façon suivante.

A l'entrée du tronçon de transfert 25, le levier 48 est maintenu dans sa position de transport. Le levier 60 est basculé jusqu'à ce que le bras de support 68 soit au voisinage immédiat de la surface supérieure de l'article reposant sur le bras de support 46.

Alors que les deux bras de support 46 et 68 enserrent l'article entre eux, ceux-ci sont basculés conjointement vers le convoyeur 22 pour assurer le transfert et le retournement de l'article.

En particulier, le bras de support 46 est progressivement soulevé, alors que le bras de support 68 est ramené simultanément vers la boucle d'entraînement 62.

Ainsi, comme représenté sur les figures 2 et 3, lors du transfert de l'article, les bras de support des deux leviers adjacents définissent un espace 80 de retenue d'un article lors de son transfert du premier au second convoyeur.

Dans l'espace 80, l'article est confiné et est notamment sensiblement totalement immobilisé en rotation par rapport aux bras de support 46 et 68.

Au cours du basculement des leviers, l'article transféré se trouve retourné comme représenté sur la figure 3.

Le basculement des leviers se poursuit jusqu'à ce que le levier 60 retrouve sa position de transport sur la boucle d'entraînement 62. Dans cette position, l'article repose sur le bras de support 68 en étant en appui sur sa face qui était initialement sa face supérieure lorsque l'article reposait sur le levier 48.

Après que le levier 60 a repris sa position de transport, le levier 48 est ramené en position de transport sur la boucle d'entraînement 32. La face supérieure de l'article reposant sur le levier 60 est alors la face sur laquelle l'article reposait sur le levier 48.

Dans la station 14, de part et d'autre des moyens 24 de transfert et de retournement, sont disposés respectivement sur le premier convoyeur 20 et le second convoyeur 22 un premier poste de vision 90 et un second poste de vision 92. Ceux-ci sont adaptés respectivement pour capturer au moins une image numérique de la région exposée de l'article circulant sur les premier et second convoyeurs.

Chaque poste de vision 90, 92 comporte par exemple deux caméras notées 90A, 90B et 92A, 92B, respectivement. Celles-ci sont disposées dans la partie supérieure du convoyeur associé 20, 22, de part et d'autre de celui-ci. Elles sont décalées angulairement par rapport à la verticale et leur champ de vision est orienté vers le bas en direction du convoyeur.

Les caméras sont reliées à l'unité centrale de traitement d'informations 30.

L'installation décrite ici fonctionne de la manière suivante.

Les fruits sont introduits en vrac dans la station de chargement 10. Ceux-ci sont ainsi déversés sur le tronçon de répartition du premier convoyeur. Les fruits entrant en contact avec les rouleaux 40 se répartissent sous l'action de leur propre poids dans les alvéoles 42 délimités entre les rouleaux, de sorte que chaque alvéole n'est occupé que par un fruit.

Les fruits sont ensuite successivement pesés dans la station de pesage 12 et le poids de chaque fruit est adressé à l'unité centrale de traitement d'informations 30.

Après pesage, les fruits pénètrent dans la station d'examen visuel 14. Lors de leur passage à la verticale du poste de vision 90, deux images de la surface exposée de chaque fruit sont numérisées et transmises à l'unité centrale de traitement d'informations 30.

Lors du passage dans les moyens de transfert et de retournement 24, les fruits, prélevés sur le premier convoyeur 20, sont successivement transférés sur le second convoyeur 22 en étant retournés.

Ainsi, la surface sur laquelle un fruit s'appuie sur le convoyeur 20 se trouve exposée lorsque le fruit est en appui sur le second convoyeur 22. Dans ces conditions, lors du passage du fruit à la verticale du poste de vision 92, celui-ci mémorise deux images de la surface du fruit qui était masquée lors de son transport sur le premier convoyeur 20.

Ces deux images sont transmises à l'unité centrale de traitement d'informations 30.

Pour chaque fruit, l'unité centrale de traitement d'informations 30 dispose alors de quatre images du fruit prises sous des angles différents. Du fait du retournement du fruit entre le premier et le second convoyeurs, les images mémorisées couvrent l'essentiel de la surface du fruit, permettant une détermination précise de son aspect extérieur.

Les informations reçues par l'unité centrale de traitement d'informations 30 et relatives au poids de chaque fruit, à son aspect extérieur et à sa nature permettent de déterminer le canal 26 dans lequel chaque fruit doit être éjecté.

Afin de libérer un fruit dans le canal déterminé, l'unité centrale de traitement d'informations 30 commande le basculement des leviers 60 lorsque ceux-ci passent au-dessus du canal retenu. A cet effet, l'élément de déclenchement 28A associé au canal retenu est actionné lors du passage du levier pour pousser le bras de commande 70 et ainsi provoquer le basculement du fruit qui chute, sous l'effet de son propre poids, dans le canal empli d'eau correspondant.

Dans une station d'examen visuel telle que décrite ici, les images de chaque article sont toutes prises depuis la partie supérieure de l'article reposant sur un convoyeur, ce qui évite d'avoir à prévoir des convoyeurs ajourés.

De plus, le retournement des articles entre les deux postes de vision successifs permet que l'essentiel de la surface de l'article puisse être examiné.

En variante, la station de pesage 12 est disposée non pas sur le premier convoyeur 20 mais sur le second convoyeur 22 en aval de la station d'examen visuel 14.

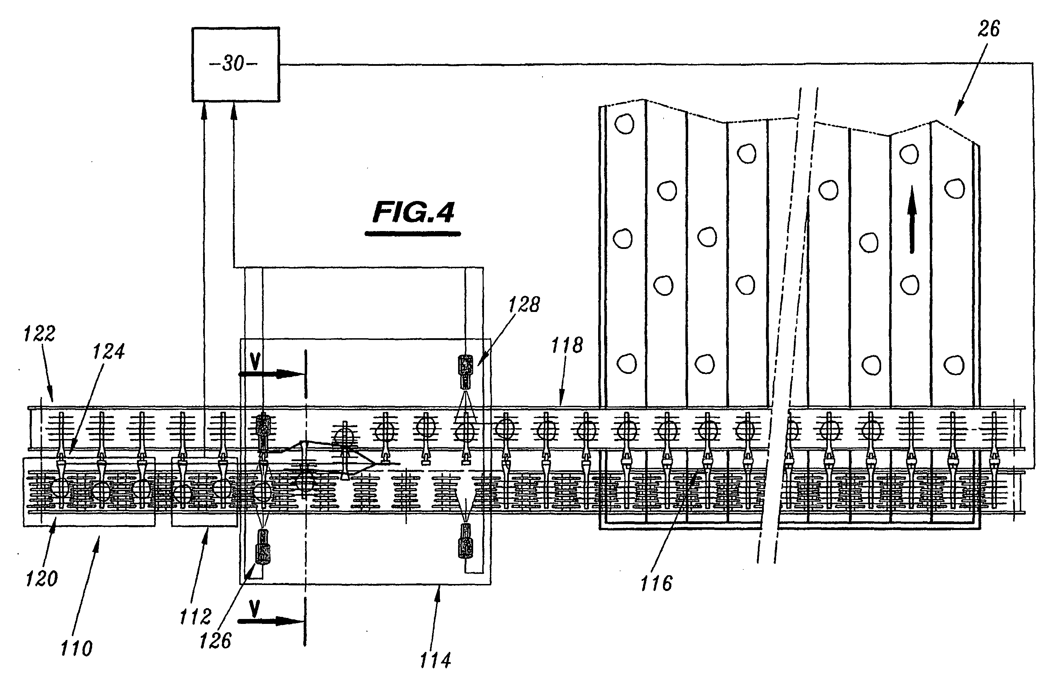

L'installation de tri d'articles représentée sur la figure 4 comporte également une station de chargement 110, une station de pesage 112, une station d'examen visuel 114 et une zone ou station d'éjection 116.

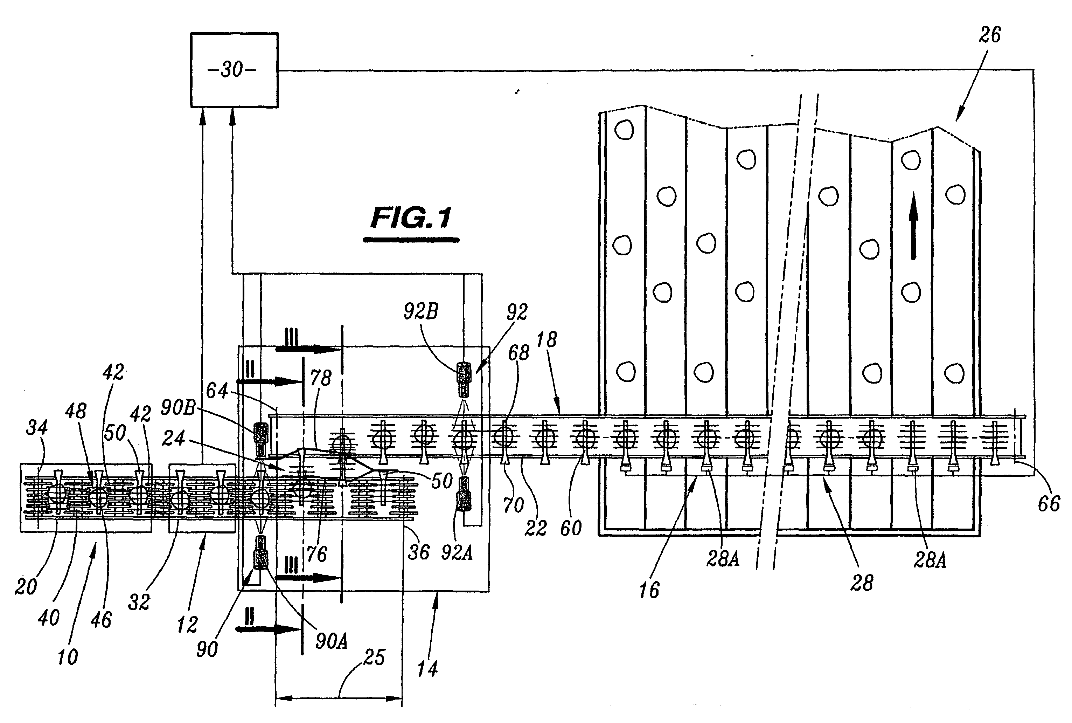

Cette station comporte des moyens de transfert 118 de structure différente de ceux utilisés dans le mode de réalisation de la figure 1. En particulier, ces moyens de transfert comportent un unique convoyeur 119 s'étendant depuis la station de chargement jusqu'à la station d'éjection 116.

Cet unique convoyeur comporte une première et une seconde files de transport latérales 120, 122 s'étendant parallèlement l'une à l'autre et avançant de manière simultanée en étant solidaire d'une même chaîne d'entraînement. Entre ces deux files de transport 120, 122, le convoyeur 119 comporte une file centrale 124 se déplaçant à la même vitesse que les files latérales 120 et 122.

Les files latérales 120, 122 et centrale 124 s'étendent toutes deux sur toute la longueur de l'installation. En particulier, la première file 120 traverse la station de chargement 110 et la station de pesage 112.

La station d'examen visuel 114 s'étend sur des tronçons contigus des première et seconde files 120, 122. Des premier et second postes de vision 126, 128 sont prévus successivement sur le trajet des moyens de transport 118. Ces postes de vision sont installés respectivement sur la première file 120 et sur la seconde file 122. Ils sont de nature analogue à ceux notés 90, 92 dans le mode de réalisation de la figure 1.

La seconde file 122 se prolonge après le second poste de vision 128 dans la station d'éjection 116.

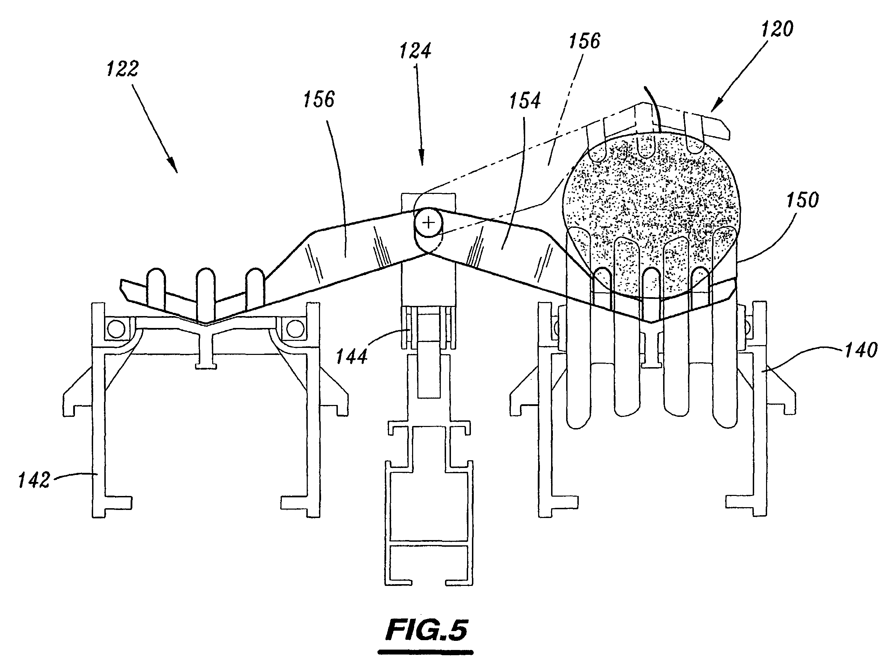

Plus précisément, et comme représenté sur la figure 5, la file latérale 120 est constituée d'une succession d'éléments 140 articulés les uns aux autres. De même, la file latérale 122 est également formée d'une succession d'éléments 142 articulés les uns aux autres. Les éléments adjacents des deux files sont reliées entre eux transversalement à la chaîne d'entraînement commune refermée en boucle, elle-même mue par un groupe motoréducteur non représenté.

La file centrale 124 comporte une succession d'éléments 144 articulés les uns aux autres pour former une boucle, cette boucle étant solidaire des éléments correspondants 140 et 142 des files latérales.

Entre les éléments 140 de la première file sont disposés des rouleaux 150 montés rotatifs. Ces rouleaux sont analogues aux rouleaux 40 du premier mode de réalisation et assurent une répartition des articles suivant la longueur de la file 120, lors de leur chargement dans la station de chargement 110.

Des premiers leviers de support 154 sont articulés à une de leurs extrémités sur les éléments 144. Ces leviers sont adaptés pour venir s'insérer entre deux rouleaux successifs 150 de la première file et ainsi supporter un article.

De même, des seconds leviers 156 sont également articulés sur les éléments 144 de la file centrale suivant un même axe que les premiers leviers 154. Ces seconds leviers 156 sont adaptés pour prendre appui sur les éléments 142 de la seconde file.

Chacun des leviers 154 et 156 est articulé entre sa position de repos en appui sur les éléments mobiles de la file 120 ou 122 et une position quasiment retournée au-dessus de l'autre file, comme illustré sur la figure 5 en trait mixte.

Enfin, dans une région de transfert des articles de la première file 120 vers la seconde file 122, prévue entre le premier et le second poste de vision 126, 128, sont installés des moyens 160 d'actionnement des leviers 154 et 156 afin d'assurer, comme dans le mode de réalisation précédent, un retournement des articles lors du transfert des articles de la première file vers la seconde file. Lors de ce transfert, les articles sont maintenus entre les premier et second leviers 154 et 156, réduisant ainsi les risques de glissement des articles lors de leur retournement.

On conçoit que, dans ce mode de réalisation, les éléments mobiles des première et seconde files étant mus par des mêmes moyens d'entraînement, et ce sur un même trajet, aucun problème de synchronisation n'existe. De même, les leviers 154 et 156 étant entraînés suivant toute la longueur du convoyeur en restant fixes par rapport aux positions de transport des articles sur les première et seconde files, la synchronisation des premier et second leviers correspondants n'a pas à être assurée.

## Revendications

1. Station (14) d'examen visuel d'articles tels que des fruits, du type comportant des moyens (18 ; 118) de transport adaptés pour supporter les articles pendant leur transport, laquelle station (14) comporte, d'une part, deux postes de vision (90, 92 ; 126, 128) disposés successivement sur le trajet de transport des articles, chaque poste de vision étant adapté pour examiner une face exposée des articles reposant sur les moyens de transport (18 ; 118), et d'autre part, des moyens (24) de retournement des articles disposés entre les deux stations de vision (90, 92 ; 126, 128), lesquels moyens de retournement (24) sont adaptés pour déposer chaque article sur les moyens de transport (18 ; 118), avant son passage en regard du second poste de vision (92 128), sensiblement sur la face exposée de l'article lors de son passage dans le premier poste de vision (90 ; 126), et ainsi exposer, en regard du second poste de vision (92 ; 128), la face de l'article en contact avec les moyens de transport (18 ; 118) lors de son passage dans le premier poste de vision (90 ; 126) **caractérisée en ce que** les moyens (24) de retournement comportent deux leviers de support (48, 60) basculants, délimitant entre eux un espace (80) de retenue d'un article dans lequel l'article est maintenu sensiblement immobile par rapport aux deux leviers de support (48, 60), les deux leviers de support (48, 60) étant déplaçables sensiblement simultanément entre une position de prélèvement de l'article sur les moyens de transport (18) et une position de dépôt de l'article retourné sur les moyens de transport (18).

2. Station selon la revendication 1, **caractérisée en ce que** les moyens de transport (18) comportent deux convoyeurs successifs (20, 22) circulant chacun en regard d'un poste de vision (90, 92), et entre lesquels sont disposés les moyens (24) de retournement des articles, lesquels moyens de retournement (24) sont adaptés pour assurer un transfert des articles du premier convoyeur (20) au second convoyeur (22).

3. Station selon la revendication 2, **caractérisée en ce que** les deux leviers de support (48, 60) sont articulés chacun sur un convoyeur (20, 22), et **en ce qu'**elle comporte, dans une région (25) de transfert et de retournement des articles, des moyens (76, 78) d'actionnement des bras de support (48, 60).

4. Station selon la revendication 3, **caractérisée en ce que** les moyens d'actionnement des leviers de support (48, 60) comportent des surfaces de came fixes (76, 78) par rapport auxquelles les convoyeurs (20, 22) sont déplaçables, lesquelles surfaces de came (76, 78) sont adaptées pour coopérer avec les leviers de support (48, 60), lors de l'avancement des convoyeurs (20, 22), pour provoquer le basculement des leviers (48, 60).

5. Station selon la revendication 3 ou 4, **caractérisée en ce que**, dans la région de transfert et de retournement (25), les deux convoyeurs (20, 22) sont adjacents et se déplacent parallèlement l'un à l'autre à des vitesses égales.

6. Station selon l'une quelconque des revendications 2 à 5, **caractérisée en ce que** le convoyeur (20), placé en amont des moyens de retournement (24), comporte des moyens (40) de répartition des articles en des emplacements (45) espacés d'un pas déterminé suivant sa longueur, et **en ce que** le convoyeur (22), placé en aval des moyens de retournement (24), comporte des plages (68) de support des articles qui sont espacées d'un pas déterminé suivant sa longueur, les moyens de retournement (24) étant adaptés pour transférer chaque article d'un emplacement (45) du premier convoyeur sur une plage de support (68) du second convoyeur (22).

7. Station selon la revendication 1, **caractérisée en ce que** les moyens de transport (118) comportent un unique convoyeur présentant deux files contiguës (120, 122) de transport des articles, chaque file circulant en regard d'un poste de vision (126, 128), et **en ce que** les moyens de retournement sont disposés entre les deux files et sont adaptés pour assurer un transfert des articles d'une file (120) à l'autre file (122) du convoyeur.

8. Station selon la revendication 7, **caractérisée en ce que** les deux leviers de support (154, 156) sont portés par ledit convoyeur unique.

9. Station selon la revendication 8, **caractérisée en ce que** les deux leviers de support (154, 156) sont articulés autour d'un même axe.

## Claims

1. Station (14) for visual inspection of articles such as fruit, of the type comprising transport means (18; 118) which are suitable for supporting the articles during the transport thereof, which station (14) comprises, on the one hand, two viewing stations (90, 92; 126, 128) which are arranged successively along the transport path of the articles, each viewing station being suitable for inspecting an exposed face of the articles which rest on the transport means (18; 118) and, on the other hand, means (24) for inverting the articles, which inverting means (24) are arranged between the two viewing stations (90, 92; 126, 128) and which are suitable for depositing each article on the transport means (18; 118), before it passes opposite the second viewing station (92; 128), substantially on the exposed face of the article when it passes into the first viewing station (90; 126), and thus to expose, opposite the second viewing station (92; 128), the face of the article in contact with the transport means (18; 118) when it passes into the first viewing station (90; 126), **characterised in that** the inverting means (24) comprise two pivoting support levers (48, 60) which delimit between them a space (80) for holding an article, in which space the article is held so as to be substantially immoveable relative to the two support levers (48, 60), the two support levers (48, 60) being able to be displaced substantially at the same time between a position for removing the article from the transport means (18) and a position for depositing the inverted article on the transport means (18).

2. Station according to claim 1, **characterised in that** the transport means (18) comprise two successive conveyors (20, 22) which each run opposite a viewing station (90, 92) and between which the means (24) for inverting the articles are arranged, which inverting means (24) are suitable for ensuring that the articles are transferred from the first conveyor (20) to the second conveyor (22).

3. Station according to claim 2, **characterised in that** the two support levers (48, 60) are each articulated to a conveyor (20, 22) and **in that** the station comprises, in a region (25) for transferring and inverting the articles, means (76, 78) for actuating the support arms (48, 60).

4. Station according to claim 3, **characterised in that** the means for actuating the support levers (48, 60) comprise fixed cam surfaces (76, 78), relative to which the conveyors (20, 22) can be displaced and which are suitable for cooperating with the support levers (48, 60), when the conveyors (20, 22) advance, in order to bring about the pivoting of the levers (48, 60).

5. Station according to claim 3 or 4, **characterised in that**, in the transfer and inverting region (25), the two conveyors (20, 22) are adjacent and are displaced parallel with each other at equal speeds.

6. Station according to any one of claims 2 to 5, **characterised in that** the conveyor (20), which is positioned upstream of the inverting means (24), comprises means (40) for distributing articles at locations (45) which are spaced at a given interval over the length thereof, and **in that** the conveyor (22), which is positioned downstream of the inverting means (24), comprises regions (68) for supporting the articles, which regions are spaced at a given interval over the length thereof, the inverting means (24) being suitable for transferring each article from a location (45) of the first conveyor to a support region (68) of the second conveyor (22).

7. Station according to claim 1, **characterised in that** the transport means (118) comprise a single conveyor having two contiguous lines (120, 122) for transporting the articles, each line running opposite a viewing station (126, 128), and **in that** the inverting means are arranged between the two lines and are suitable for ensuring that the articles are transferred from one line (120) of the conveyor to the other line (122) of the conveyor.

8. Station according to claim 7, **characterised in that** the two support levers (154, 156) are carried by the single conveyor.

9. Station according to claim 8, **characterised in that** the two support levers (154, 156) are articulated about the same axis.

## Patentansprüche

1. Station (14) zur visuellen Prüfung von Artikeln wie Früchten, umfassend Transportmittel (18; 118), die dafür ausgelegt sind, die Artikel bei ihrem Transport zu tragen, wobei diese Station (14) einerseits zwei Sichtvorrichtungen (90, 92; 126, 128) aufweist, die auf dem Transportweg der Artikel hintereinander angeordnet sind, wobei jede Sichtvorrichtung dafür ausgelegt ist, eine ausgesetzte Seite der auf den Transportmitteln (18; 118) aufliegenden Artikel zu prüfen, und andererseits Mittel (24) zum Wenden der Artikel, die zwischen den beiden Sichtvorrichtungen (90, 92; 126, 128) angeordnet sind, wobei diese Wendemittel (24) dafür ausgelegt sind, jeden Artikel vor seinem Durchgang vor der zweiten Sichtvorrichtung (92; 128) auf die Transportmittel (18; 118) im wesentlichen auf die bei seinem Durchgang in der ersten Sichtvorrichtung (90; 126) ausgesetzte Seite des Artikels aufzulegen und auf diese Weise vor der zweiten Sichtstation (92; 128) die Seite des Artikels auszusetzen, die bei seinem Durchgang in der ersten Sichtvorrichtung mit den Transportmitteln (18; 118) in Kontakt ist, **dadurch gekennzeichnet, daß** die Wendemittel (24) zwei verschwenkbare Traghebel (48, 60) aufweisen, die miteinander einen Raum (80) zum Festhalten eines Artikels begrenzen, in dem der Artikel bezüglich der beiden Traghebel (48, 60) im wesentlichen unbewegt gehalten wird, wobei die beiden Traghebel (48, 60) zwischen einer Stellung der Entnahme des Artikels auf den Transportmitteln (18) und einer Stellung des Ablegens des gewendeten Artikels auf den Transportmitteln (18) im wesentlichen gleichzeitig beweglich sind.

2. Station nach Anspruch 1, **dadurch gekennzeichnet, daß** die Transportmittel (18) zwei aufeinanderfolgende Förderer (20, 22) aufweisen, die jeweils vor einer Sichtvorrichtung (90, 92) umlaufen und zwischen denen die Mittel (24) zum Wenden der Artikel angeordnet sind, wobei diese Wendemittel (24) dafür ausgelegt sind, eine Übertragung der Artikel von dem ersten Förderer (20) auf den zweiten Förderer (22) zu gewährleisten.

3. Station nach Anspruch 2, **dadurch gekennzeichnet, daß** die beiden Traghebel (48, 60) jeweils an einem Förderer (20, 22) angelenkt sind und daß sie in einem Bereich (25) der Übertragung und des Wendens der Artikel Mittel (76, 78) zur Betätigung der Tragarme (48, 60) aufweist.

4. Station nach Anspruch 3, **dadurch gekennzeichnet, daß** die Mittel zur Betätigung der Traghebel (48, 60) feststehende Steuerflächen (76, 78) aufweisen, bezüglich denen die Förderer (20, 22) beweglich sind, wobei diese Steuerflächen (76, 78) dafür ausgelegt sind, bei der Vorbewegung der Förderer (20, 22) mit den Traghebeln (48, 60) zusammenzuwirken, um das Verschwenken der Hebel (48, 60) zu bewirken.

5. Station nach Anspruch 3 oder 4, **dadurch gekennzeichnet, daß** die beiden Förderer (20, 22) im Übertragungs- und Wendebereich (25) benachbart sind und sich parallel zueinander mit gleichen Geschwindigkeiten bewegen.

6. Station nach einem der Ansprüche 2 bis 5, **dadurch gekennzeichnet, daß** der vor den Wendemitteln (24) angeordnete Förderer (20) Mittel (40) zum Verteilen der Artikel auf Plätze (45) aufweist, die in einem bestimmten Schritt gemäß seiner Länge voneinander entfernt sind, und daß der hinter den Wendemitteln (24) angeordnete Förderer (22) Bereiche (68) zum Tragen der Artikel aufweist, die in einem bestimmten Schritt gemäß seiner Länge voneinander entfernt sind, wobei die Wendemittel (24) dafür ausgelegt sind, jeden Artikel von einem Platz (45) des ersten Förderers auf einen Tragbereich (68) des zweiten Förderers (22) zu übertragen.

7. Station nach Anspruch 1, **dadurch gekennzeichnet, daß** die Transportmittel (118) einen einzigen Förderer aufweisen, der zwei aneinander grenzende Schlangen (120, 122) zum Transport der Artikel aufweist, wobei jede Schlange vor einer Sichtstation (126, 128) umläuft, und daß die Wendemittel zwischen den beiden Schlangen angeordnet sind und dafür ausgelegt sind, eine Übertragung der Artikel von einer Schlange (120) auf die andere Schlange (122) des Förderers vorzunehmen.

8. Station nach Anspruch 7, **dadurch gekennzeichnet, daß** die beiden Traghebel (154, 156) von diesem einzigen Förderer getragen sind.

9. Station nach Anspruch 8, **dadurch gekennzeichnet, daß** die beiden Traghebel (154, 156) an einer gemeinsamen Achse angelenkt sind.
